Europäisches Patentamt

European Patent Office

Office européen des brevets

(11) Publication number: **0 457 405 A2**

# EUROPEAN PATENT APPLICATION

(21) Application number: **91201146.7**

(51) Int. Cl.⁵: **A01G 9/08**

(22) Date of filing: **13.05.91**

(30) Priority: **14.05.90 EP 90201201**

(43) Date of publication of application:
**21.11.91 Bulletin 91/47**

(84) Designated Contracting States:
**BE CH DE FR GB IT LI NL SE**

(71) Applicant: **HAWE ELEKTROTRAKTIE**

**TRANSPORTSYSTEMEN B.V.**
**Oosteindsepad 8**
**NL-2661 EP Bergschenhoek(NL)**

(72) Inventor: **Wooning, Hermanus Hubertus**
**Oosteindsepad 8**
**NL-2661 EP Bergschenhoek(NL)**

(54) **Establishment for pricking out plants.**

(57) Plant material (2) in a ball of soil (1) or another medium is taken out an arranged accumulation of plants by grippers and put in containers. The plants can be separately sorted out after which the containers take one of the transport directions which depends on the kind of sorting out.

Figuur 2

EP 0 457 405 A2

The invention concerns the pricking out of plants by means of containers that are used separately and are transportable.

In most cases, one has to work with plant material that grows in trays. Those plants grow in separate holes which makes it difficult to work with grippers that are mechanically connected to each other, because it complicates sorting out and removing plants that are no good. Moreover, it is impossible to sort out and remove automatically in this way.

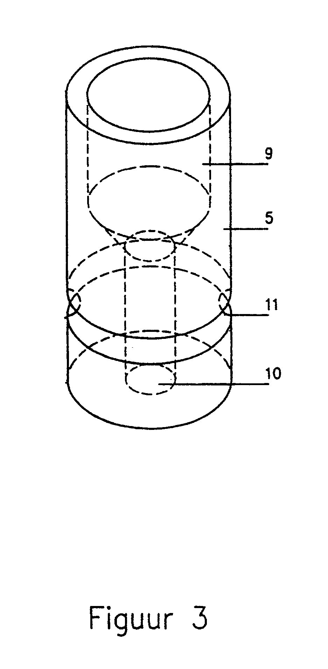

The invention avoids the problem described above by using containers that can be separated and transported (see figure 3).

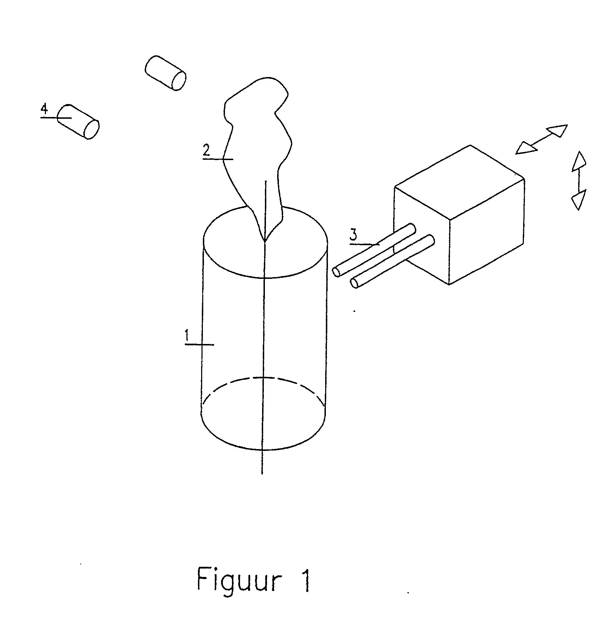

The advantage of this method lies in the fact that the plants can be checked during the act of placing in the container. If the several different data are put in the computer, the steering of the computer could be arranged in such a way that it is possible to transport all plants to the right place. In this way, uniform bulks are created, and plants that are no good are thrown out. One method to work with this invention is described hereunder. The following figures will be used: figure 1, 2 and 3.

Figure 1 gives a perspective of a plant with a ball of soil as it could grow in a tray. Next to it, a gripper system already known is given.

Figure 2 gives the transport movements of a line of plants in a container during one kind of sorting out: transplanting and throwing out.

In figure 3, the possible functional way of a container is shown.

In figure 1, a plant (2) is put in a ball of earth (1). This ball is partly pushed out of the tray and taken by a gripper with needles (3) that pushes those needles in the ball of soil that makes transportation possible. The plant is checked by photo cells (4). Whether there is a plant in the soil and whether it is too small or large enough to be transplanted is determined.

Next to the tray, a line of grippers with needles that are connected to one another is installed. These grippers can a take a complete line of plants out of a tray. Each plant is checked separately during which is decided whether the plant is transplanted or thrown out.

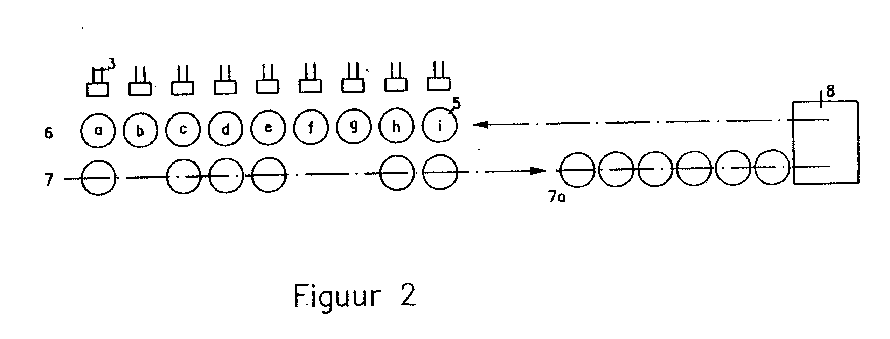

In figure 2, a situation is drawn in which plant B, plant F and plant G are thrown out in containers B, F and G and plants A, C, D, E, H and I are being transplanted. At the moment, the decision is made by the system, all containers (5) line up (6).

The containers A, C, D, E, H and I are pushed to line (7), whereas B, F and G stay where they are. From line (7), transport takes place towards 7a to location 8 where the plants aare transplanted through air pressure. After transplanting, the containers move to line 6 and join together. In the meantime, B, F and G have taken positions A, B and C; the containers A, C, D, E, H and I have taken positions D, E, F, G, H and I. The process starts all over again. The container of figure 3 can be of a different size and construction. The diameter should be geared for the distance at which the plants are to be transplanted at position (8) of figure 2. In figure 3, the container (5) has a hollow space (9) and a kind of cylindrical opening (10) that goes from (9) to the bottom. The gripper places the plant in the hollow space that is blown out by the cylinder during transplanting. In figure 3, the container has a groove (11) to support better gliding during transport.

The form of the ball of earth (1) in figure 1 can be very different. It can be conelike, four-squared, pyramidlike a.s.o. The gripper mechanism (3) does not always have to have needles in its movement mechanism, but could make use of a gripper with 4 fingers in starlike grooves that have been left open next to the ball of soil. Photo cells (4) could be replaced by a line scan camera or a camera that scans the whole tray. It does not scan a plant separately, but scans the whole line or tray. The transport direction given in figure 2 could be extended with more directions and more locations to plant, if more than one kind of sorting out is wished for. For example, if plant D is spotted as a second quality product, it will be put in a second transport direction and lead to a second transplant site.

The form and sizes of the container as given in figure 3 can strongly deviate from this. This depends on the size of the plant, the stability insisted on during transport and the way of transplanting.

## Claims

1. Establishment for pricking out plants by means of containers (5) that can be indivually moved and separated in such a way that sorting out plant material can properly take place.

2. Containers as mentioned in 1 have a cylindrical opening (10) that goes from the hollow space (9) to the bottom of the container.

3. The transport mechanism functions as follows. The containers that are sorted are collected. During collecting the bottom of the containers is dragged along the transport mechanism until a movement forward is given.

Figuur 1

Figuur 2

Figuur 3